(19) Europäisches Patentamt
European Patent Office
Office européen des brevets

(11) **EP 3 251 935 B1**

(12) **EUROPÄISCHE PATENTSCHRIFT**

(45) Veröffentlichungstag und Bekanntmachung des Hinweises auf die Patenterteilung:
**30.09.2020 Patentblatt 2020/40**

(51) Int Cl.:
***B62M 6/45*** *(2010.01)*

(21) Anmeldenummer: **17167134.0**

(22) Anmeldetag: **19.04.2017**

(54) **STEUERUNGSVERFAHREN UND STEUERGERÄT ZUR ANPASSUNG EINER GESCHWINDIGKEIT DER SCHIEBEHILFE EINES ELEKTROFAHRRADS**

CONTROL METHOD AND CONTROL DEVICE FOR ADAPTING A SPEED OF PUSHING AID OF AN ELECTRIC BICYCLE

PROCÉDÉ ET DISPOSITIF DE COMMANDE DESTINÉS À ADAPTER LA VITESSE DE L'AIDE À LA TRACTION D'UN VÉLO ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.06.2016 DE 102016209570**

(43) Veröffentlichungstag der Anmeldung:
**06.12.2017 Patentblatt 2017/49**

(73) Patentinhaber: **Robert Bosch GmbH**
**70442 Stuttgart (DE)**

(72) Erfinder:
• **Greiner, Rinaldo**
**72762 Reutlingen (DE)**
• **Baumgaertner, Daniel**
**72070 Tuebingen (DE)**

(56) Entgegenhaltungen:
**EP-A1- 2 957 449          DE-A1-102015 110 145**
**DE-A1-102015 110 317   DE-T2- 60 110 853**
**JP-A- 2015 145 238**

**Beschreibung**

Die vorliegende Erfindung betrifft ein Steuerungsverfahren zur Anpassung einer Geschwindigkeit der Schiebehilfe eines Elektrofahrrads sowie ein Steuergerät, welches dazu eingerichtet ist, dieses Verfahren durchzuführen. Die Erfindung betrifft außerdem ein Elektrofahrrad mit dem Steuergerät.

Stand der Technik

In den Schriften DE 20 2005 018 126 U1 und DE 20 2005 006 684 U1 wird jeweils ein Anfahrhilfe-Betriebsmodus für ein Elektrofahrrad beschrieben, wobei die Anfahrhilfe auch als Schiebehilfe verwendet werden kann. Die Anfahrhilfe wird durch das Betätigen eines Schalters am Lenker aktiviert. Durch die Aktivierung erzeugt der Elektromotor ein Drehmoment zum Antrieb des Elektrofahrrads ohne Trittunterstützung des Radfahrers. Dadurch resultiert eine Geschwindigkeit des Elektrofahrrads knapp unterhalb oder gleich der gesetzlich vorgegebenen Grenzgeschwindigkeit für eine Anfahr- beziehungsweise Schiebehilfe. In der Schrift DE 20 2005 018 126 U1 weist das Elektrofahrrad zusätzlich eine Gangschaltung zur Änderung des Übersetzungsverhältnisses zwischen der Tretachse und der Hinterradachse auf. Zur Erzeugung einer definierten Geschwindigkeit der Anfahrhilfe wird in ein bekanntes Übersetzungsverhältnis der Gangschaltung gewechselt.

Die Schrift DE 601 10 853 T2 beschreibt ein motorbetriebenes Fahrrad mit einem Antriebsmotor. Der Antriebsmotor ist dazu eingerichtet, eine Selbstfahrleistung in Reaktion auf eine Fahrhebelbetätigung von einem Fahrer zu erzeugen.

Die Schrift D2 (EP 2 957 449 A1), welche eine Schiebehilfe mit dem nächsten Stand der Technik zeigt, offenbart ein Batterie-unterstütztes Fahrrad, welches dazu eingerichtet ist, einen Fahrer mittels eines Elektromotors zu unterstützen. Die Schiebehilfe-Steuerung bestimmt die Fahrzeuggeschwindigkeit über die Drehzahl des Vorderrades und stellt fest ob die Geschwindigkeit unterhalb oder gleich einer vorgeschriebenen Geschwindigkeit ist. Diese vorgeschriebene Geschwindigkeit kann z.B. 5 km/h betragen.

Die Aufgabe der vorliegenden Erfindung ist es, eine Einstellung einer Geschwindigkeit während eines Schiebehilfebetriebs eines Elektrofahrrads zu verbessern.

Offenbarung der Erfindung

Die Aufgabe wird gemäß der unabhängigen Ansprüche 1 und 3 gelöst.

Die vorliegende Erfindung betrifft ein Steuerungsverfahren zur Anpassung einer Geschwindigkeit der Schiebehilfe, ohne dass in ein bekanntes Übersetzungsverhältnis einer Gangschaltung des Elektrofahrrads geschaltet wird. Die Erfindung betrifft auch ein Steuergerät, welches dazu eingerichtet ist, das Steuerungsverfahren durchzuführen, sowie ein Elektrofahrrad mit dem Steuergerät.

Das Elektrofahrrad umfasst wenigstens einen Elektromotor zum Antrieb des Elektrofahrrads, ein Steuergerät zur Ansteuerung des Elektromotors und eine Gangschaltung zur Änderung des Übersetzungsverhältnisses zwischen der Tretachse und der Hinterradachse. Des Weiteren weist das Elektrofahrrad einen Sensor zum Erfassen der aktuellen Geschwindigkeit des Elektrofahrrads auf. Der Sensor ist beispielsweise ein Reed-Sensor, welcher typischerweise einen Magneten an einer Speiche eines Laufrades aufweist. Ein Reed-Sensor benötigt ein bis zwei komplette Radumdrehungen beziehungsweise zwei Reed-Impulse zur Erfassung der Geschwindigkeit. Alternativ kann der Sensor einen GPS-Sensor umfassen. Zur schnelleren Erfassung der Geschwindigkeit der Schiebehilfe kann der Sensor alternativ einen Beschleunigungs-Sensor aufweisen. Das Elektrofahrrad ist dazu eingerichtet das erfindungsgemäße Steuerungsverfahren durchzuführen.

Das Steuerungsverfahren zur Schiebehilfe eines Elektrofahrrads umfasst wenigstens eine Erkennung einer Aktivierung der Schiebehilfe. Bei der erkannten Aktivierung, wird im nachfolgenden Schritt ein konstantes Startdrehmoment durch eine Ansteuerung des Elektromotors erzeugt, wodurch das Elektrofahrrad beschleunigt wird und eine Geschwindigkeit des Elektrofahrrads resultiert. Die Ansteuerung des Elektromotors zur Erzeugung des konstanten Startdrehmoments erfolgt in Abhängigkeit einer Maximalgeschwindigkeit für eine Schiebehilfe, welche beispielsweise gesetzlich vorgegeben in Deutschland 6 km/h beträgt. Die resultierende Geschwindigkeit ist außerdem abhängig vom eingelegten Übersetzungsverhältnis der Gangschaltung oder des Getriebes. Zur Anpassung der Geschwindigkeit umfasst das Steuerungsverfahren eine Erfassung einer aktuellen Motordrehzahl des Elektromotors und eine Erfassung der aktuellen Geschwindigkeit des Elektrofahrrads. In Abhängigkeit der erfassten Motordrehzahl und der erfassten Geschwindigkeit wird das eingelegte Übersetzungsverhältnis der Gangschaltung oder des Getriebes ermittelt. Die Anpassung der Geschwindigkeit des Elektrofahrrads erfolgt im darauf folgenden Schritt durch eine Regelung des Elektromotors in Abhängigkeit des ermittelten Übersetzungsverhältnisses und der Maximalgeschwindigkeit, welche nicht überschritten wird. Durch das erfindungsgemäße Steuerungsverfahren resultiert eine komfortable Schiebehilfe für das Elektrofahrrad, wobei die Geschwindigkeit der Schiebehilfe an die Maximalgeschwindigkeit für eine Schiebehilfe angenähert wird. Gegenüber dem Stand der Technik wird außerdem für die Schiebehilfe kein Wechsel in ein definiertes Übersetzungsverhältnis der Gangschaltung benötigt.

In einer Weiterführung der Erfindung erfolgt die Erkennung der Aktivierung der Schiebehilfe automatisch, wenn eine Beschleunigung des Elektrofahrrads in Vorwärtsrichtung und eine Geschwindigkeit kleiner als 6 km/h erfasst sowie keine Trittfrequenz des Radfahrers und keine Gewichtsbelastung auf den Sattel des Elektrofahrrads erkannt wird. Die automatische Aktivierung der Schiebehilfe erhöht den Komfort und die Sicherheit der Schiebehilfe, weil beispielsweise beide Hände zur Lenkung des Elektrofahrrads eingesetzt können und die Aufmerksamkeit des Radfahrers unghindert auf den Straßenverkehr gerichtet werden kann.

Das erfindungsgemäße Steuergerät umfasst wenigstens eine Recheneinheit, welche die Aktivierung der Schiebehilfe erkennt. Bei einer erkannten Aktivierung wird ein Steuersignal für den Elektromotor zur Erzeugung des konstanten Startdrehmomentes ausgegeben. Anschließend wird von der Recheneinheit die aktuelle Motordrehzahl des Elektromotors und die aktuelle Geschwindigkeit des Elektrofahrrads erfasst. Die Recheneinheit regelt das Steuersignal für den Elektromotor in Abhängigkeit der erfassten Motordrehzahl und der erfassten Geschwindigkeit beziehungsweise in Abhängigkeit des ermittelten Übersetzungsverhältnisses der Gangschaltung und der Maximalgeschwindigkeit der Schiebehilfe zur Anpassung der Geschwindigkeit des Elektrofahrrads.

Kurze Beschreibung der Zeichnungen

Die vorliegende Erfindung wird nachfolgend anhand bevorzugter Ausführungsformen und beigefügter Zeichnungen erläutert.

Figur 1: Elektrofahrrad

Figur 2: Ablaufdiagramm des Steuerungsverfahrens zur Schiebehilfe

Figur 3: Steuergerät

Figur 4: Diagramm der Geschwindigkeitsanpassung durch das Steuerungsverfahren

Ausführungsbeispiele

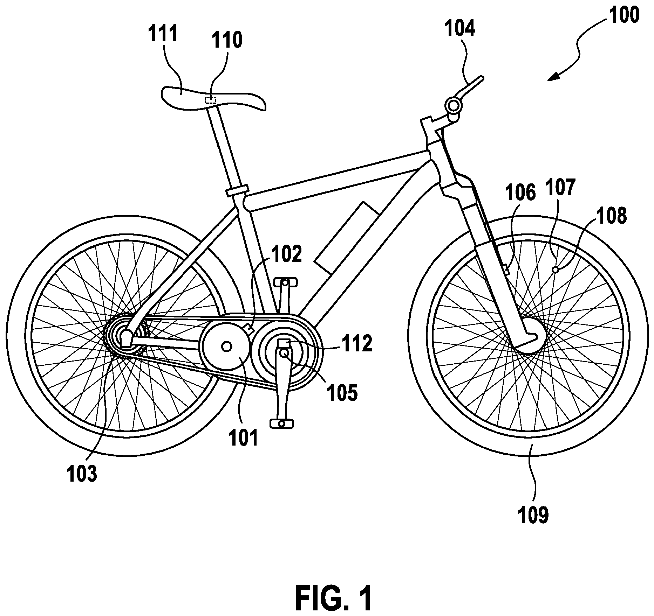

In Figur 1 ist ein Elektrofahrrad 100 skizziert. Das Elektrofahrrad 100 weist einen Elektromotor 101 und ein Steuergerät 104 zur Ansteuerung des Elektromotors 101 auf. Außerdem ist eine Gangschaltung 103 oder ein Getriebe zur Änderung des Übersetzungsverhältnisses zwischen der Tretachse 105 beziehungsweise dem Elektromotor 101 und der Hinterradachse am Elektrofahrrad 100 angeordnet. Das Elektrofahrrad 100 weist auch mindestens einen Sensor 106 zur Erfassung der aktuellen Geschwindigkeit des Elektrofahrrads 100 auf. Der Sensor 106 kann beispielsweise ein Reed-Sensor sein, wobei an mindestens einer Speiche 107 eines Rades 109 des Elektrofahrrads 100 ein Magnet 108 des Sensors 106 angeordnet ist. Alternativ kann der Sensor 106 ein GPS-Sensor oder ein Beschleunigungssensor sein, wobei der GPS-Sensor und/oder der Beschleunigungssensor bevorzugt im Steuergerät 104 angeordnet werden. Optional kann das Elektrofahrrad 100 einen weiteren Sensor 102 zur Erfassung der Motordrehzahl n des Elektromotors 101 und/oder einen zusätzlichen Sensor 110 zur Erfassung der Gewichtsbelastung auf den Sattel 111 und/oder einen Sensor 112 zur Erfassung der Trittfrequenz an der Tretachse 105 aufweisen.

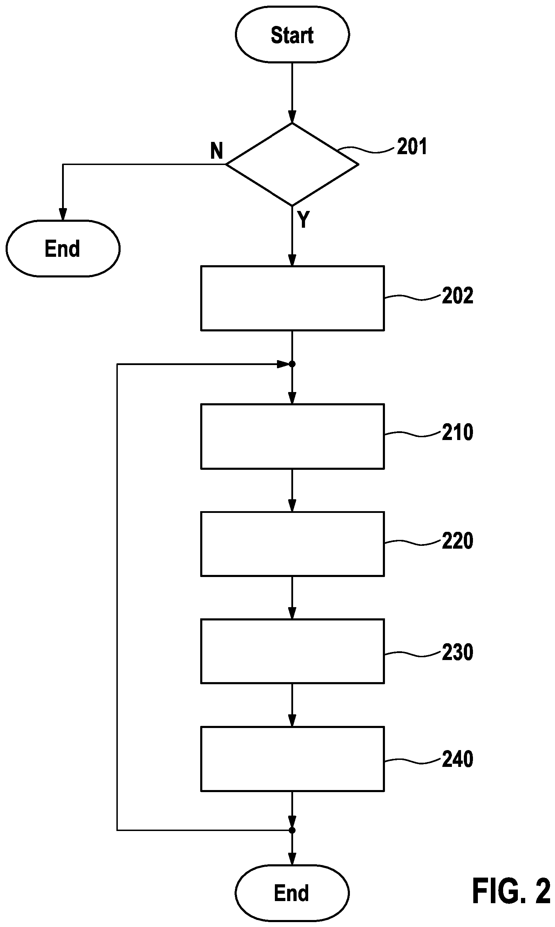

In Figur 2 ist ein Ablaufdiagramm des erfindungsgemäßen Verfahrens dargestellt. Zunächst erfolgt eine Erkennung 201 einer Aktivierung der Schiebehilfe. Wenn keine Aktivierung erkannt worden ist, werden die weiteren Schritte des Steuerungsverfahrens zur Schiebehilfe nicht durchgeführt. Die Erkennung 201 der Aktivierung kann beispielsweise durch das Erfassen einer manuellen Eingabe des Radfahrers oder ein manuelles Betätigen eines Schalters erfolgen. In einer Weiterführung der Erfindung erfolgt die Erkennung 201 der Aktivierung der Schiebehilfe automatisch mittels einer Auswertung von wenigstens einer Messgröße mindestens eines Sensors, wobei bevorzugt mehrere Sensorgrößen ausgewertet werden. Beispielsweise erfolgt die automatische Erkennung 201 durch die Sensoren 106, 110 und 112, wenn eine Beschleunigung des Elektrofahrrads in Vorwärtsrichtung und eine Geschwindigkeit kleiner als 6 km/h erfasst, sowie keine Trittfrequenz des Radfahrers und keine Gewichtsbelastung auf den Sattel des Elektrofahrrads erkannt wird.

Wenn die Aktivierung der Schiebehilfe im Schritt 201 erkannt worden ist, wird im nächsten Schritt 202 durch eine Ansteuerung des Elektromotors ein konstantes Startdrehmoment zum Antrieb des Elektrofahrrads erzeugt. Dadurch resultiert eine Geschwindigkeit des Elektrofahrrads. Für die Schiebehilfe des Elektrofahrrads 100 darf eine gesetzlich vorgeschriebene, länderspezifische Maximalgeschwindigkeit nicht überschritten werden. Diese Maximalgeschwindigkeit liegt in Deutschland bei 6 km/h. Da bei der Ansteuerung 202 mit dem konstanten Startdrehmoment vom höchsten, eingelegten Übersetzungsverhältnis ausgegangen wird, resultiert immer eine Geschwindigkeit kleiner oder gleich der Maximalgeschwindigkeit für die Schiebehilfe. Bei einem eingelegten Übersetzungsverhältnis i kleiner dem höchsten

Übersetzungsverhältnis $i_{max}$, dass heißt $i < i_{max}$, wird beispielsweise eine Geschwindigkeit von 2 km/h erzeugt. Anschließend erfolgt eine Erfassung 210 einer aktuellen Motordrehzahl n des Elektromotors und eine Erfassung 220 der aktuellen Geschwindigkeit v des Elektrofahrrads. Die aktuelle Geschwindigkeit v wird beispielsweise durch einen Reed-Sensor oder einen GPS-Sensor erfasst. Alternativ erfolgt die Erfassung 220 der Geschwindigkeit v des Elektrofahrrads durch Integration von erfassten Beschleunigungswerten des Elektrofahrrads in Vorwärtsrichtung oder mittels eines Reed-Sensors durch Ausschluss hoher Geschwindigkeiten als Abschätzung. Im nachfolgenden Schritt 230 wird das eingelegte Übersetzungsverhältnis i der Gangschaltung in Abhängigkeit der erfassten Motordrehzahl n und der erfassten Geschwindigkeit v ermittelt. Die Ermittlung 230 des eingelegten Übersetzungsverhältnisses i kann beispielsweise gemäß Gleichung (1) erfolgen, wobei das Übersetzungsverhältnis i* zwischen dem Elektromotor und der Tretachse und der äußere Radumfang U eines der Laufräder berücksichtigt werden.

$$i = \frac{v}{n \cdot i^* \cdot U}$$

$$(1)$$

Im folgenden Schritt wird eine Regelung 240 des Elektromotors zur Anpassung der Geschwindigkeit des Elektrofahrrads in Abhängigkeit des ermittelten Übersetzungsverhältnisses i und der Maximalgeschwindigkeit für die Schiebehilfe durchgeführt. Dabei wird die Geschwindigkeit v insbesondere gesteigert, wobei eine gesetzlich vorgegebene Maximalgeschwindigkeit $v_{max}$ nicht überschritten wird. Durch eine Wiederholung der Schritte nach der Ansteuerung 202 wird die Geschwindigkeit v der Schiebehilfe mehrstufig angepasst. Beispielsweise erfolgt in einem ersten Durchlauf des Steuerungsverfahrens die Erfassung 220 der Geschwindigkeit v mittels eines Beschleunigungs-Sensors. Durch eine zeitliche Integration der erfassten Beschleunigungswerte des Elektrofahrrads in Vorwärtsrichtung wird die Geschwindigkeit schnell, aber relativ ungenau ermittelt. Durch die Regelung 240 des Elektromotors in Abhängigkeit der ermittelten Geschwindigkeit erfolgt eine Anpassung der Geschwindigkeit der Schiebehilfe kurz nach dem Start der Schiebehilfe. Aufgrund der Ungenauigkeit der Ermittlung der Geschwindigkeit auf Basis von den erfassten Beschleunigungswerten kann diese Regelung 240 zusätzlich in Abhängigkeit eines Sicherheitsfaktors cs erfolgen, wodurch eine Geschwindigkeit der Schiebehilfe deutlich unterhalb der Maximalgeschwindigkeit resultiert. Nach der Erfassung der aktuellen Geschwindigkeit v mittels eines Reed- oder GPS-Sensors, dass heißt nach dem zweiten Reed-Impuls, werden die Schritte nach der Ansteuerung 202 wiederholt. Somit kann die Geschwindigkeit v der Schiebehilfe durch das Steuerungsverfahren gestuft gesteigert werden, ohne dass die Maximalgeschwindigkeit überschritten wird.

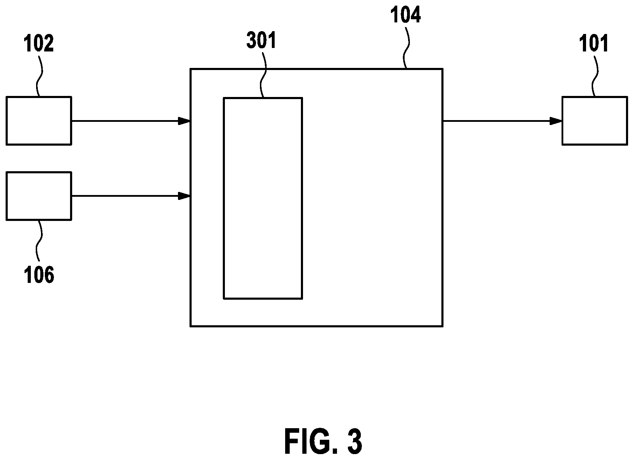

In Figur 3 ist das erfindungsgemäße Steuergerät 104 dargestellt. Das Steuergerät 104 ist dazu eingerichtet das Steuerungsverfahren zur Schiebehilfe durchzuführen. Es umfasst eine Recheneinheit 301. Die Recheneinheit 301 erkennt eine Aktivierung der Schiebehilfe und erzeugt bei erkannter Aktivierung ein Steuersignal für den Elektromotor. Durch das Steuersignal wird ein konstantes Startdrehmoment $M_{Start}$ des Elektromotors 101 in Abhängigkeit der Maximalgeschwindigkeit $v_{max}$ erzeugt. Die Recheneinheit 301 erfasst außerdem eine die aktuelle Geschwindigkeit v des Elektrofahrrads repräsentierende Größe vom Sensor 106 und eine die aktuelle Motordrehzahl n des Elektromotors 101 repräsentierende Größe. Die Recheneinheit 301 regelt in Abhängigkeit der erfassten Geschwindigkeit v und der erfassten Motordrehzahl n das Steuersignal für den Elektromotor 101.

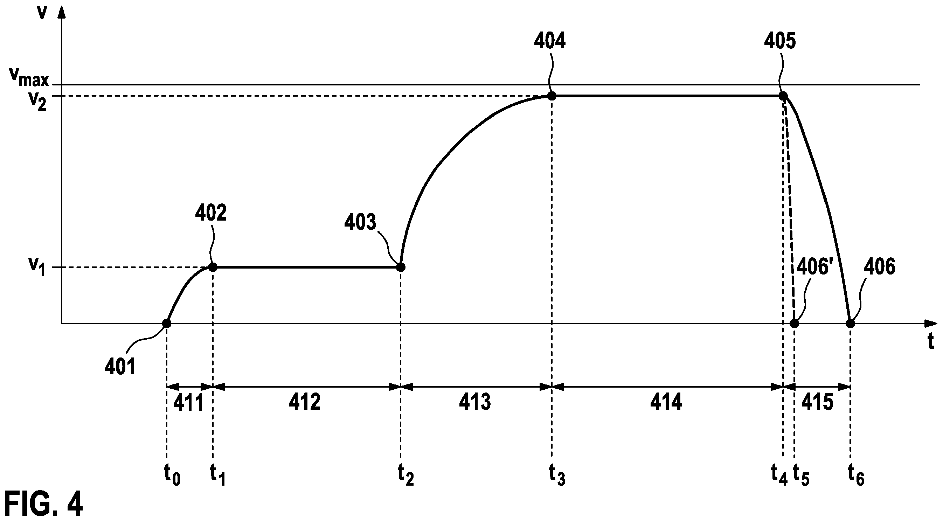

In Figur 4 ist ein Ausführungsbeispiel des Steuerungsverfahrens als Diagramm dargestellt. Zum Zeitpunkt $t_0$ wird im Punkt 401 eine Aktivierung der Schiebehilfe erkannt, und anschließend vom Zeitpunkt $t_0$ bis zum Zeitpunkt $t_1$ im Bereich 411 ein konstantes Startdrehmoment $M_{Start}$ des Elektromotors erzeugt. Um die Maximalgeschwindigkeit $v_{max}$ bei der Beschleunigung des Elektrofahrrads durch das konstante Startdrehmoment $M_{Start}$ im Bereich 411 nicht zu überschreiten, wird angenommen, dass das eingelegte Übersetzungsverhältnis i dem höchsten

Übersetzungsverhältnis $i_{max}$ der Gangschaltung beziehungsweise des Getriebes entspricht. Die zum Zeitpunkt $t_1$ im Punkt 402 erreichte Geschwindigkeit $v_1$ ist in diesem Beispiel niedriger als die Maximalgeschwindigkeit $v_{max}$, weil das eingelegte Übersetzungsverhältnis kleiner als das höchste Übersetzungsverhältnis ist ($i < i_{max}$). Vom Zeitpunkt $t_1$ bis zum Zeitpunkt $t_2$, dass heißt im Bereich 412, fährt das Elektrofahrrad mit der konstanten Geschwindigkeit $v_1$, wobei die aktuelle Geschwindigkeit $v_1$ und die aktuelle Motordrehzahl n erfasst werden. Bis zum Zeitpunkt $t_2$, siehe Punkt 403, wird das Übersetzungsverhältnis in Abhängigkeit der erfassten Geschwindigkeit v und der erfassten Motordrehzahl n ermittelt. Zum Zeitpunkt $t_2$ erfolgt die Regelung des Elektromotors in Abhängigkeit des ermittelten Übersetzungsverhältnisses, wodurch das erzeugte Startdrehmoment des Elektromotors gesteigert wird. Durch das erhöhte Drehmoment des Elektromotors wird das Elektrofahrrad bis zum Zeitpunkt $t_3$, dass heißt im Bereich 413, beschleunigt. Dadurch resultiert bis zum Zeitpunkt $t_3$ beziehungsweise dem Punkt 404 die Geschwindigkeit $v_2$, welche beispielsweise knapp unterhalb der Maximalgeschwindigkeit $v_{max}$ liegt. Diese Geschwindigkeit $v_2$ bleibt beispielsweise bis zum Zeitpunkt $t_4$ konstant. Sie kann alternativ erneut durch das Steuerungsverfahren angepasst werden. Zum Zeitpunkt $t_4$ beziehungsweise im Punkt 405 wird die Schiebehilfe deaktiviert. Durch die Deaktivierung rollt das Elektrofahrrad bis zum Stillstand zum Zeitpunkt $t_6$ beziehungsweise im Punkt 406 aus, wobei der Radfahrer das Elektrofahrrad mit einer manuellen Kraft abbremsen kann. Alternativ wird das Elektrofahrrad durch die Deaktivierung der Schiebehilfe zusätzlich durch eine Ansteuerung einer mechanischen Bremse oder der Ansteuerung des Elektromotors gebremst, so dass nach der Deaktivierung die zurückgelegte Webstrecke bis zum Zeitpunkt $t_5$ beziehungsweise dem Punkt 406' minimiert wird.

**Patentansprüche**

1. Steuerungsverfahren zu einer Schiebehilfe eines Elektrofahrrads (100), wobei das Elektrofahrrad (100) wenigstens einen Elektromotor (101) zum Antrieb des Elektrofahrrads (100), ein Steuergerät (104), welches das Steuerungsverfahren durchführt, und eine Gangschaltung (103) zur Änderung eines Übersetzungsverhältnisses (i) zwischen einer Tretachse (105) und einer Hinterradachse umfasst, aufweisend eine Erkennung (201) einer Aktivierung der Schiebehilfe, wobei bei einer erkannten Aktivierung mindestens die folgenden Schritte durchgeführt werden,

   • Ansteuerung (202) des Elektromotors (101) in Abhängigkeit einer Maximalgeschwindigkeit der Schiebehilfe zur Erzeugung einer Geschwindigkeit (v) des Elektrofahrrads (100), wobei die Ansteuerung (202) mit einem konstanten Startdrehmoment ($M_{Start}$) erfolgt und angenommen wird, dass das eingelegte Übersetzungsverhältnis (i) dem höchsten Übersetzungsverhältnis ($i_{max}$) der Gangschaltung (103) entspricht, so dass immer eine Geschwindigkeit kleiner oder gleich der Maximalgeschwindigkeit für die Schiebehilfe resultiert,
   • Erfassung (210) einer aktuellen Motordrehzahl (n) des Elektromotors (101),
   • Erfassung (220) der aktuellen Geschwindigkeit (v) des Elektrofahrrads (100),
   • Ermittlung (230) des eingelegten Übersetzungsverhältnisses (i) der Gangschaltung (103) in Abhängigkeit der erfassten Motordrehzahl (n) und der erfassten Geschwindigkeit (v), und
   • Regelung (240) des Elektromotors (101) in Abhängigkeit des ermittelten Übersetzungsverhältnisses (i) und der Maximalgeschwindigkeit der Schiebehilfe zur Anpassung der Geschwindigkeit (v), wobei die Geschwindigkeit (v) gesteigert und die Maximalgeschwindigkeit nicht überschritten wird,
   • wobei in einem ersten Durchlauf des Steuerungsverfahrens die Erfassung (220) der Geschwindigkeit (v) mittels eines Beschleunigungs-Sensors erfolgt und nach der Erfassung der aktuellen Geschwindigkeit (v) mittels eines Reed- oder GPS-Sensors die Schritte nach der Ansteuerung (202) wiederholt werden.

2. Steuerungsverfahren nach Anspruch 1, **dadurch gekennzeichnet, dass** die Erkennung (201) einer Aktivierung der Schiebehilfe erfolgt, wenn

   • die erfasste Geschwindigkeit (v) des Elektrofahrrads kleiner als 6 km/h ist,
   • eine Beschleunigung ($a_x$) des Elektrofahrrads (100) in Vorwärtsrichtung erfasst wird,
   • keine Trittfrequenz des Radfahrers erkannt wird, und
   • keine Gewichtsbelastung auf den Sattel des Elektrofahrrads erkannt wird.

3. Steuergerät (104), umfassend wenigstens eine Recheneinheit (301), welche ein Steuerungsverfahren nach einem der Ansprüche 1 oder 2 durchführt, und wobei die Recheneinheit (301) eine Aktivierung der Schiebehilfe erkennt und die Recheneinheit (301) bei erfolgter Aktivierung

   • ein Steuersignal für den Elektromotor (101) in Abhängigkeit einer Maximalgeschwindigkeit der Schiebehilfe zum Antrieb des Elektrofahrrads (100) erzeugt, und
   • eine aktuelle Motordrehzahl (n) des Elektromotors (101) erfasst, und
   • eine aktuelle Geschwindigkeit (v) des Elektrofahrrads (100) erfasst, und
   • das Steuersignal für den Elektromotor (101) zur Anpassung der Geschwindigkeit des Elektrofahrrads (100) in Abhängigkeit des ermittelten Übersetzungsverhältnisses (i) und der Maximalgeschwindigkeit der Schiebehilfe regelt.

4. Elektrofahrrad (100), umfassend wenigstens folgende Komponenten

   • einen Elektromotor (101) zum Antrieb des Elektrofahrrads (100), und
   • ein Steuergerät (104) nach Anspruch 3, welches ein Steuerungsverfahren nach einem der Ansprüche 1 oder 2 durchführt, und
   • eine Gangschaltung (103) zur Änderung des Übersetzungsverhältnisses (i) zwischen der Tretachse (105) und der Hinterradachse, und
   • einen Sensor (106) zum Erfassen einer aktuellen Geschwindigkeit (v) des Elektrofahrrads (100).

**Claims**

1. Control method for a pushing aid of an electric bicycle (100), wherein the electric bicycle (100) comprises at least an electric motor (101) for driving the electric bicycle (100), a controller (104) that performs the control method, and a gear shift (103) for changing a gear ratio (i) between a pedal crank axle (105) and a rear wheel axle, comprising identifying (201) activation of the pushing aid, wherein, when activation is identified, at least the following steps are performed:

   • actuating (202) the electric motor (101) on the basis of a maximum speed of the pushing aid in order to generate a speed (v) of the electric bicycle (100), wherein the actuation (202) takes place with a constant starting torque ($M_{Start}$) and it is assumed that the engaged gear ratio (i) corresponds to the highest gear ratio ($i_{max}$) of the gear shift (103), such that a speed that is less than or equal to the maximum speed for the pushing aid always results,
   • recording (210) a current motor speed (n) of the electric motor (101),
   • recording (220) the current speed (v) of the electric bicycle (100),
   • determining (230) the engaged gear ratio (i) of the gear shift (103) on the basis of the recorded motor speed (n) and the recorded speed (v), and
   • adjusting (240) the electric motor (101) on the basis of the determined gear ratio (i) and the maximum speed of the pushing aid in order to adjust the speed (v), wherein the speed (v) is increased and the maximum speed is not exceeded,
   • wherein, in a first run of the control method, the speed (v) is recorded (220) by way of an acceleration sensor and, after the current speed (v) has been recorded by way of a reed sensor or GPS sensor, the steps following the actuation (202) are repeated.

2. Control method according to Claim 1, **characterized in that** activation of the pushing aid is identified (201) when:

   • the recorded speed (v) of the electric bicycle is less than 6 km/h,
   • an acceleration ($a_x$) of the electric bicycle (100) in the forwards direction is recorded,
   • no pedalling frequency of the cyclist is identified, and
   • no weight loading is identified on the saddle of the electric bicycle.

3. Controller (104), comprising at least one computing unit (301) that performs a control method according to either of Claims 1 and 2, and wherein the computing unit (301) identifies activation of the pushing aid and the computing unit (301), when activation has taken place:

   • generates a control signal for the electric motor (101) on the basis of a maximum speed of the pushing aid in order to drive the electric bicycle (100), and
   • records a current motor speed (n) of the electric motor (101), and
   • records a current speed (v) of the electric bicycle (100), and
   • adjusts the control signal for the electric motor (101) in order to adjust the speed of the electric bicycle (100) on the basis of the determined gear ratio (i) and the maximum speed of the pushing aid.

4. Electric bicycle (100), comprising at least the following components:

   • an electric motor (101) for driving the electric bicycle (100), and
   • a controller (104) according to Claim 3, which performs a control method according to either of Claims 1 and 2, and
   • a gear shift (103) for changing the gear ratio (i) between the pedal crank axle (105) and the rear wheel axle, and
   • a sensor (106) for recording a current speed (v) of the electric bicycle (100).

**Revendications**

1. Procédé de commande pour une aide à la poussée d'une bicyclette électrique (100), la bicyclette électrique (100) comportant au moins un moteur électrique (101) destiné à propulser la bicyclette électrique (100), un contrôleur (104) qui met en œuvre le procédé de commande et un mécanisme de changement de rapport (103) destiné à modifier un rapport de démultiplication (i) entre un axe de pédalier (105) et un axe de roue arrière, comprenant une reconnaissance (201) d'une activation de l'aide à la poussée, au moins les étapes suivantes étant exécutées lorsqu'une activation est reconnue,

* commande (202) du moteur électrique (101) en fonction d'une vitesse maximale de l'aide à la poussée en vue de générer une vitesse (v) de la bicyclette électrique (100), la commande (202) étant effectuée avec un couple de démarrage ($M_{Start}$) constant et en supposant que le rapport de démultiplication (i) engagé correspond au rapport de démultiplication ($i_{max}$) le plus élevé du mécanisme de changement de rapport (103), de sorte qu'il en résulte toujours une vitesse inférieure ou égale à la vitesse maximale pour l'aide à la poussée,
* détection (210) d'une vitesse de rotation de moteur (n) actuelle du moteur électrique (101),
* détection (220) de la vitesse (v) actuelle de la bicyclette électrique (100),
* détermination (230) du rapport de démultiplication (i) engagé du mécanisme de changement de rapport (103) en fonction de la vitesse de rotation de moteur (n) détectée et de la vitesse (v) détectée, et
* régulation (240) du moteur électrique (101) en fonction du rapport de démultiplication (i) déterminé et de la vitesse maximale de l'aide à la poussée en vue d'adapter la vitesse (v), la vitesse (v) étant augmentée et la vitesse maximale n'étant pas dépassée,
* dans une première itération du procédé de commande, la détection (220) de la vitesse (v) étant effectuée au moyen d'un capteur d'accélération et, après la détection de la vitesse (v) actuelle au moyen d'un capteur Reed ou GPS, les étapes après la commande (202) étant répétées.

2.  Procédé de commande selon la revendication 1, **caractérisé en ce que** la reconnaissance (201) d'une activation de l'aide à la poussée est effectuée lorsque

    * la vitesse (v) détectée de la bicyclette électrique est inférieure à 6 km/h,
    * une accélération ($a_x$) de la bicyclette électrique (100) en marche avant est détectée,
    * aucune fréquence de pédalage du cycliste n'est reconnue, et
    * aucune charge de poids sur la selle de la bicyclette électrique n'est reconnue.

3.  Contrôleur (104), comprenant au moins une unité de calcul (301) qui met en œuvre le procédé de commande selon l'une des revendications 1 et 2, et l'unité de calcul (301) reconnaissant une activation de l'aide à la poussée et, lorsque l'activation a lieu, l'unité de calcul (301)

    * générant un signal de commande pour le moteur électrique (101) en fonction d'une vitesse maximale de l'aide à la poussée en vue de propulser la bicyclette électrique (100), et
    * détectant une vitesse de rotation de moteur (n) actuelle du moteur électrique (101), et
    * détectant une vitesse (v) actuelle de la bicyclette électrique (100), et
    * régulant le signal de commande pour le moteur électrique (101) en vue d'adapter la vitesse de la bicyclette électrique (100) en fonction du rapport de démultiplication (i) déterminé et de la vitesse maximale de l'aide à la poussée.

4.  Bicyclette électrique (100), comprenant au moins les composants suivants

    * un moteur électrique (101) destiné à propulser la bicyclette électrique (100)
    * un contrôleur (104) selon la revendication 3, qui met en œuvre un procédé de commande selon l'une des revendications 1 et 2, et
    * un mécanisme de changement de rapport (103) destiné à modifier le rapport de démultiplication (i) entre l'axe de pédalier (105) et l'axe de roue arrière, et
    * un capteur (106) destiné à détecter une vitesse (v) actuelle de la bicyclette électrique (100).

**FIG. 1**

FIG. 2

**102**

**106**

**301**

**104**

**101**

# FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202005018126 U1
- DE 202005006684 U1
- DE 60110853 T2
- EP 2957449 A1